# EUROPEAN PATENT APPLICATION

(11) **EP 2 698 346 A1**
(43) Date of publication of application: **19.02.2014**
(21) Application number: 12180404.1
(22) Date of filing: 14.08.2012
(51) Int. Cl.: C01B 25/37, H01M 4/525

(54) **Mixed sulphate containing lithium-manganese-metal phosphate**

(71) Applicant: Clariant International Ltd., 4132 Muttenz 1 (CH)
(72) Inventor: Tran, Nicolas, 85405 Nandlstadt (DE); Nuspl, Gerhard, 81543 München (DE)
(74) Representative: Stolmár & Partner

(57) **Abstract**

The present invention relates to a sulphate containing mixed Lithium-manganese iron phosphate of formula

LiₓFe_{y}Mn_{1-y}M_{1-(y+z)} (PO₄)ᵤ(SO₄)ᵥ

wherein M is a metal selected from the group Co, Ni, Al, Mg, Sn, Pb, Nb B, Cu, Cr, Mo, Ru, V, Ga, Ca, Sr, Ba, Ti, Zr, Cd and mixtures thereof and wherein 0.9 ≤ x ≤ 1.5, 0 ≤ y < 1, and 0,5 ≤ (y + z) ≤ 1 and 0.0 < u ≤ 1,0 and 0 < v ≤ 0,25, a process for producing it as well as its use as cathode material in a secondary lithium-ion battery.

## Description

The present invention relates to a novel substituted sulphate containing lithium-manganese iron phosphate, a process for producing it as well as its use as cathode material in a secondary lithium-ion battery.

Since the publications by Goodenough et al. (J. Electrochem. Soc., 144, 1188-1194, 1997) there has been significant interest in particular in using lithium iron phosphate as cathode material in rechargeable secondary lithium-ion batteries. Lithium iron phosphate, compared with conventional lithium compounds based on spinels or layered oxides, such as lithium manganese oxide, lithium cobalt oxide and lithium nickel oxide, offers higher safety properties in the delithiated state such as are required in particular for the use of batteries in future in electric cars, electrically powered tools etc.

Pure lithium iron phosphate material was improved by so-called "carbon coating" (Ravet et al., Meeting of Electrochemical Society, Honolulu, 17 - 31 October 1999, EP 1 084 182 B1), as an increased capacity and power capability of the carbon-coated material are achieved at room temperature (160 mAH/g).

In addition to customary solid-state syntheses (US 5,910,382 Cl or US 6,514,640 C1), a hydrothermal synthesis for lithium iron phosphate with the possibility of controlling the size and morphology of the lithium iron phosphate particles was disclosed in WO 2005/051840.

A disadvantage of lithium iron phosphate is in particular its redox couple Fe³⁺/Fe²⁺ which has a much lower redox potential vis-à-vis Li/Li⁺ (3.45 V versus Li/Li⁺) than for example the redox couple Co³⁺/Co⁴⁺ in LiCoO₂ (3.9 V versus Li/Li⁺).

In particular lithium manganese phosphate LiMnPO₄ is of interest in view of its higher Mn²⁺/Mn³⁺ redox couple (4.1 volt) versus Li/Li⁺. LiMnPO₄ was also already disclosed by Goodenough et al., US 5,910,382.

However, the production of electrochemically active and in particular carbon-coated LiMnPO₄ has proved to be very difficult.

The electrochemical properties of lithium manganese phosphate were improved by iron substitution of the manganese sites:
Herle et al. in Nature Materials, Vol. 3, pp. 147-151 (2004) describe lithium-iron and lithium-nickel phosphates doped with zirconium. Morgan et al. describes in Electrochem. Solid State Lett. 7 (2), A30-A32 (2004) the intrinsic lithium-ion conductivity in LiₓMPO₄ (M = Mn, Fe, Co, Ni) olivines. Yamada et al. in Chem. Mater. 18, pp. 804-813, 2004 deal with the electrochemical, magnetic and structural features of Liₓ(Mn_{y}Fe_{1-y})PO₄, which are also disclosed e.g. in W02009/009758. Structural variations of Liₓ(Mn_{y}Fe_{1-y})PO₄, i.e. of the lithiophilite-triphylite series, were described by Losey et al. The Canadian Mineralogist, Vol. 42, pp. 1105-1115 (2004). The practical effects of the latter investigations in respect of the diffusion mechanism of deintercalation in Liₓ(Mn_{y}Fe_{1-y})PO₄ cathode material are found in Molenda et al. Solid State Ionics 177, 2617-2624 (2006).

In most cases, an increase in specific capacity compared to the pure lithium manganese phosphate upon substitution of iron for manganese in lithium manganese phosphate is observed. However, a plateau-like region occurs for the discharge curves at 3.5 volt vis-à-vis lithium (iron plateau), the length of which compared with pure LiMnPO₄ increases as the iron content increases, which results in a loss of energy density compared to an ideal LiMnPO₄ that would have the same capacity as a LiFePO₄. (see Yamada et al. in the publication mentioned above). The slow kinetics (charge and discharge kinetics) of manganese-containing metal phosphates, in particular Liₓ(Mn_{y}Fe_{1-y})PO₄ with y > 0.8, have so far made the use of these compounds for battery applications largely impossible. Compounds like LiMn_{0.56}Fe_{0.33}Zn_{0.10}PO₄ or LiMn_{0.66}Fe_{0.33}PO₄ have been recently synthesized (DE 10 2010 006 077 A1) and have proven to show good capacity when used as active materials for cathodes in secondary lithium ion batteries.

However, synthesis of these compounds especially via wet chemistry methods or hydrothermal methods yields materials with large primary particles and a high lithium deficiency causing a negative impact such as a relatively low capacity of the related lithium cells.

The object of the present invention was therefore to provide novel lithium-manganese-iron-phosphate compounds which provide a high energy density when used as cathode material and provide further a high redox potential with a rapid kinetics in respect of charge and discharge processes and to avoid a large lithium deficiency in the stoichiometry.

This object is achieved by a substituted sulphate containing mixed lithium-manganese iron phosphate of formula

LiₓFe_{y}Mn_{1-y}M_{1-(y+z)}(PO4)ᵤ(SO₄)ᵥ

wherein
M is a metal selected from the group consisting of Co, Ni, Al, Mg, Sn, Pb, Nb B, Cu, Cr, Mo, Ru, V, Ga, Ca, Sr, Ba, Ti, Zr, Cd and mixtures thereof
and wherein:
0.9 ≤ x ≤ 1.5, 0 < y < 1, and 0.001 ≤ (y + z) ≤ 1 and 0.75 ≤ u < 1,0 and 0 < v ≤ 0,25.

Surprisingly it was found that the sulphate containing mixed lithium manganese iron phosphate compound(s) (or in the following "the material(s)") according to the invention have a higher specific capacity than sulphate free lithium manganese iron phosphates and have a very low lithium deficiency if at all as well as a small primary particle size.

The increase in specific capacity is in the range of about 5 to 15 % compared corresponding to prior art materials without the presence of sulphate. The total sulphur content as measured by ICP is in the range between 0.01 and 0.16 wt% based on the total material weight. The material according to the invention has a controlled stoichiometry even a small Li deficiency can be controlled and regulated according to the specific electronic properties of the material.

The lithium manganese iron phosphate according to the invention may be doped or non-doped.

The term "a or the lithium manganese iron phosphate" means within the scope of this invention therefore that the lithium manganese metal phosphate is present both doped or non-doped.

"Non-doped" means pure, in particular phase-pure lithium manganese iron phosphate having the formula LiₓFe_{y}Mn_{1-y}(PO₄)ᵤ(SO₄)ᵥ wherein x, y, u and v have the same meanings as above.

"Doped" lithium manganese iron metal phosphate denotes a compound of the formula LiₓFe_{y}Mn_{1-y}M_{1-(y+z)}(PO₄)ᵤ(SO₄)ᵥ with x, y, u, z and v as defined before, wherein an additional metal M is present.

As recited above M may be selected from the group consisting of Co, Ni, Al, Mg, Sn, Pb, Nb ,B, Cu, Cr, Mo, Ru, V, Ga, Ca, Sr, Ba, Ti, Zr, Cd and mixtures thereof. Preferably M represents Co, Mg, Nb, Ni, Al, Zn and mixtures thereof and (y+z) has a value of beings ≤ 0.5 and ≥ 0.001. Exemplary stoichiometric formulae are LiₓFe_{y}Mn_{1-y}Mg_{1-(y+z)}(PO₄)ᵤ(SO₄)ᵥ, LiₓFe_{y}Mn_{1-y}Nb_{1-(y+z)}(PO₄)ᵤ(SO₄)ᵥ, LiₓFe_{y}Mn_{1-y}CO_{1-(y+z)}(PO₄)ᵤ(SO₄)ᵥ, LiₓFe_{y}Mn_{1-y}Zn_{1-(y+z)}(PO₄)ᵤ(SO₄)ᵥ and LiₓFe_{y}Mn_{1-y}Al_{1-(y+z)}(PO₄)ᵤ(SO₄)ᵥ, LiₓFe_{y}Mn_{1-y}(Zn,Mg)_{1-(y+z)}(PO₄)ᵤ(SO₄)ᵥ with x, y, z, u and v having the same meanings as recited above.

In further embodiments of the invention, the metal M represents Zn, Mg, Al or combinations thereof like (Zn, Mg), (Mg, Al) or (Zn, Al), in particular M is Zn. It has been surprisingly found that these electrochemically inactive dopants provide materials according to the invention with particularly high energy density and capacity compared to the non-doped materials according to the invention or to materials doped with other dopants when they are used as electrode

In one embodiment of the substituted sulphate containing lithium manganese iron metal phosphate of the present invention LiₓFe_{y}Mn_{1-y}M_{1-(y+z)}(PO₄)ᵤ(SO₄)ᵥ, the value for [1-(y+z)] is in the range of more than 0.02 to 0.20 and is 0.03, 0.05, 0.06, 0.07 and 0.1 in specific embodiments.

The amount of sulphate is in the range of 0 < v ≤ 0.25, preferably between 0 < v ≤ 0.012. Too much sulphate would result in a loss of Li-ion conductivity. The specific embodiments v is 0.006 or 0.010.

The substitution (or doping) by the metal cations that are in themselves electrochemically inactive seems to provide the very best results at values of 1-(y+z) = 0.03 - 0.15 ± 0.01, preferably 0.03 - 0.1 ± 0.01 with regard to energy density and capacity of the material according to the invention. Further specific embodiments are even values for [1-(y+z)] in the aforementioned ranges such as 0.05, 0.06, 0.07, 0.08, 0.09 and 0.1 ± 0.01. It was found that a high manganese content with a relatively low iron content (i.e. more manganese than iron should be present) and a relatively high zinc and/or magnesium (or aluminium) content provide the best results in respect of energy density, which is particularly surprising in view of the electrochemically inactive character of magnesium and zinc. It was found that for compounds according to the invention such as Li_{0.9}Mn_{0.80}Fe_{0.10}Zn_{0.10}(PO₄)(SO₄)_{0.01}, Li_{0.95}Mn_{0.56}Fe_{0.34}Zn_{0.10}(PO₄)(SO₄)_{0.01} and Li_{0.95}Mn_{0.59}Fe_{0.34}Zn_{0.07}(PO₄)(SO₄)_{0.01} and LiMn_{0.56}Fe_{0.33}Zn_{0.10}(PO₄)(SO₄)_{0.01} the 4V plateau is longer than for Li_{0.95}Mn_{0.59}Fe_{0.34}Zn_{0.07}PO₄ or Li_{0.80}Mn_{0.56}Fe_{0.33}Zn_{0.10}PO₄ and the specific capacity is higher, which means an increase in energy density.

In further embodiments of the present invention, the value for y in the mixed lithium manganese iron phosphate according to the invention is 0.05 - 0.4, preferably 0.1 - 0.4. Exemplary specific values are preferably 0.10 ± 0.015, 0.15 ± 0.015, 0.20 ± 0.015, and in particular 0.33 and 0.34 ± 0.15, specifically 0.35 ± 0.015. These values, in particular in conjunction with the above-mentioned values for 1-(y+z) represent the most preferred compromise between energy density and rate capability of the material according to the invention.

This means that for example the compound Li_{0.95}Mn_{0.59}Fe_{0.34}Zn_{0.07}(PO₄)(SO₄)_{0.01} has a good rate capability up to 20C during discharge comparable with that of LiFePO₄ of the state of the art (e.g. available from Clariant Produkte (Deutschland) GmbH or Phostech Lithium Inc.), but in addition also an increase in energy density (approx. 15-% vis-à-vis LiFePO₄ (measured against a lithium anode).

In embodiments of the invention, the atomic ratio Li/∑_{Fe + Mn + M} is in the range of between 0.9 to 1.5 (which corresponds to the value of x). It has been found that mixed lithium manganese iron phosphates satisfying this requirement provide an especially high capacity. In further embodiments this value is in the range of 0.9 to 1.2.

In further embodiments of the present invention, the substituted sulphate containing lithium-manganese iron phosphate compounds also comprise carbon. The carbon is particularly preferably evenly distributed throughout the substituted lithium-manganese iron metal phosphate. In other words, the carbon forms a type of matrix in which the lithium-manganese iron metal phosphate according to the invention is embedded. It makes no difference for the meaning of the term "matrix" used here whether e.g. the carbon particles serve as "nucleation sites" for the LiₓFe_{y}Mn_{1-y}M_{1-(y+z)}(PO₄)ᵤ(SO₄)ᵥ according to the invention, i.e. whether these nucleate on the carbon, or whether, as in a particularly preferred development of the present invention, the individual particles of the lithium-manganese iron metal phosphate LiₓFe_{y}Mn_{1-y}M_{1-(y+z)}(PO₄)ᵤ(SO₄)ᵥ are covered in carbon, i.e. sheathed or in other words at least partially coated. Both variants are considered as equivalent according to the invention and fall under the above definition of the term "carbon comprising".

Important for the purpose of the present invention is merely that the carbon is evenly distributed in the substituted lithium-manganese iron phosphate LiₓFe_{y}Mn_{1-y}M_{1-(y+z)}(PO₄)ᵤ(SO₄)ᵥ according to the invention and forms a type of (three-dimensional) matrix. In embodiments of the present invention, the presence of carbon or a carbon matrix can make obsolete the further addition of electrically conductive additives such as e.g. conductive carbon black, graphite etc. when using the LiₓFe_{y}Mn_{1-y}M_{1-(y+z)}(PO₄)ᵤ(SO₄)ᵥ according to the invention as electrode material.

In a further embodiment of the invention, the proportion of carbon relative to the substituted lithium-manganese iron phosphate is ≤ 4 wt.-%, in further embodiments ≤ 2.5 wt.-%, in still further embodiments ≤ 2.2 wt.-% and in still further embodiments ≤ 2.0 wt.-%. Thus the best energy densities of the material according to the invention are achieved.

The sulphate containing lithium-manganese iron phosphate LiₓFe_{y}Mn_{1-y}M_{1-(y+z)}(PO₄)ᵤ(SO₄)ᵥ according to the invention is preferably contained as active material in a cathode for a secondary lithium-ion battery. As stated, this cathode can also contain the LiₓFe_{y}Mn_{1-y}M_{1-(y+z)}(PO₄)ᵤ(SO₄)ᵥ according to the invention without further addition of a further conductive material such as e.g. conductive carbon black, acetylene black, Ketjen black, graphite etc. (in other words is free of added conductive agent), both in the case of the carbon-containing LiₓFe_{y}Mn_{1-y}M_{1-(y+z)}(PO₄)ᵤ(SO₄)ᵥ according to the invention and the carbon-free LiₓFe_{y}Mn_{1-y}M_{1-(y+z)}(PO₄)ᵤ(SO₄)ᵥ.

In further preferred embodiments, the cathode according to the invention contains a further lithium-metal-oxygen compound. This addition increases the energy density by up to approx. 10 - 15%, depending on the type of the further mixed lithium metal compound compared with cathodes which contain only the LiₓFe_{y}Mn_{1-y}M_{1-(y+z)}(PO₄)ᵤ(SO₄)ᵥ according to the invention as the sole active material.

The further lithium-metal-oxygen compound is preferably selected from substituted or non-substituted LiCoO₂, LiMn₂O₄, Li₁₊ₓ(Ni,Mn,Co)₁₋ₓO₂, Li(Ni,Co,Al)O₂ and LiNiO₂, as well as Li(Mn,Fe)PO₄, LiFePO₄, LiCoPO₄, LiNiPO₄ and mixtures thereof.

The object of the present invention is further achieved by a process for producing a mixed lithium-manganese iron phosphate according to the invention with the general formula LiₓFe_{y}Mn_{1-y}M_{1-(y+z)}(PO₄)ᵤ(SO₄)ᵥ comprising the following steps:
a. providing an aqueous mixture with a pH < 7.5 containing at least one Li starting compound, one Mn starting compound, one Fe starting compound, optionally one M starting compound, one PO₄³⁻ and one SO₄²⁻ starting compound until a precipitate or a suspension in aqueous solution forms,
b. carrying out a dispersion or grinding treatment of the mixture and/or the suspension,
c. obtaining LiₓFe_{y}Mn_{1-y}M_{1-(y+z)}(PO₄)ᵤ(SO₄)ᵥ wherein x, y, z and v have the above referenced meanings, from the suspension by reaction under hydrothermal conditions wherein a precipitate forms.

The treatment in step b. is preferably carried out until the D₉₀ value of the particles in the mixture is less than 50 µm, preferably at most 25 µm.

The term "hydrothermal conditions" means for the purpose of the present invention temperatures of 100°C to 200°C, preferably 100°C to 170°C and quite particularly preferably 120°C to 170°C as well as a pressure of 1 bar to 40 bar vapour pressure. In particular, it has surprisingly been shown that the synthesis at the quite particularly preferred temperature of 120 - 170°C, in particular at 160 ± 5°C, leads to an increase in the specific capacity of the thus-obtained LiₓFe_{y}Mn_{1-y}M_{1-(y+z)}(PO₄)ᵤ(SO₄)ᵥ according to the invention compared with reaction at more than 170°C.

As stated before, the synthesis takes place in aqueous solution/suspension. At the end of the reaction, the pH of the reaction solution (i.e. after precipitation of the product LiₓFe_{y}Mn_{1-y}M_{1-(y+z)}(PO₄)ᵤ(SO₄)ᵥ) is approx. 5 to 6.5, i.e. the reaction itself takes place in a non-basic or in other words in a weak acid environment.

The process according to the invention makes possible in particular the production of phase-pure LiₓFe_{y}Mn_{1-y}M_{1-(y+z)}(PO₄)ᵤ(SO₄)_{v,} which means free of impurities to be determined by means of XRD.

A further aspect of the present invention is the provision of LiₓFe_{y}Mn_{1-y}M_{1-(y+z)}(PO₄)ᵤ(SO₄)ᵥ which can be obtained by means of the process according to the invention and is compared to a solid state synthesis pathway phase-pure in the sense as mentioned before, i.e. especially no phosphide phases can be detected in the final product.

In embodiments of the process according to the invention, the dispersion or grinding treatment begins before or during the suspension formation and is continued until the suspension/precipitation is finished.

Preferably, the dispersion or grinding treatment starts before the suspension/precipitation of the mixture in order to bring about an increased nucleation and in order to prevent the formation of large crystals and crystal agglomerates.

After the hydrothermal treatment, the LiₓFe_{y}Mn_{1-y}M_{1-(y+z)}(PO₄)ᵤ(SO₄)ᵥ obtained according to the invention is separated off by filtration and/or centrifuging as well as dried and, in preferred embodiments of the invention, disagglomerated in order to obtain a product consisting predominantly (ca. 95%) of primary particles, e.g. by grinding with an air-jet mill.

In specific embodiments of the process according to the invention, a carbon-containing material is added during step a) or c). This can be either pure carbon, such as e.g. graphite, acetylene black or Ketjen black, or a carbon-containing precursor compound which then decomposes when exposed to the action of heat to a carbonaceous residue, e.g. starch, gelatine, a polyol, a sugar such as mannose, fructose, sucrose, lactose, galactose, a partially water-soluble polymer such as e.g. a polyacrylate etc.

Alternatively, the LiₓFe_{y}Mn_{1-y}M_{1-(y+z)}(PO₄)ᵤ(SO₄)ᵥ obtained after the hydrothermal treatment can also be mixed with a carbon-containing material as defined above or impregnated with an aqueous solution of same. This can take place either directly after the isolation (filtration) of the LiₓFe_{y}Mn_{1-y}M_{1-(y+z)}(PO₄)ᵤ(SO₄)ᵥ or after it has been dried or disagglomerated.

For example the mixture of LiₓFe_{y}Mn_{1-y}M_{1-(y+z)}(PO₄)ᵤ(SO₄)ᵥ and a carbon precursor compound (which was added e.g. during the process) or the LiₓFe_{y}Mn_{1-y}M_{1-(y+z)}(PO₄)ᵤ(SO₄)ᵥ impregnated with for a solution the carbon precursor compound (as for example sucrose or lactose) is then dried and heated at a temperature between 500°C and 850°C, wherein the carbon precursor compound is pyrolyzed to pure carbon which then wholly or at least partly covers the LiₓFe_{y}Mn_{1-y}M_{1-(y+z)}(PO₄)ᵤ(SO₄)ᵥ particles as a layer (coating).

The pyrolysis can be followed by a grinding or disagglomeration treatment but the grinding step is not mandatory.

The LiₓFe_{y}Mn_{1-y}M_{1-(y+z)}(PO₄)ᵤ(SO₄)ᵥ obtained according to the process invention is preferably dried under protective gas, in air or under vacuum at temperatures of from 50°C to 200°C, preferably under protective gas and the pyrolysis preferably likewise under protective gas, preferably nitrogen.

Within the scope of the process according to the invention, the at least one Li⁺ source, the Fe²⁺ and Mn²⁺ sources as well as the M^{y+} (y = 2, 3 or 4; for Nb and V, Mo y may be also 5) source(s) are preferably used in the form of aqueous solutions and the PO₄³⁻ and SO₄²⁻ sources in the form of a liquid, e.g. as H₃PO₄ or H₂SO₄ or as an aqueous solution or suspension of a solid phosphate and/or sulphate compound.

In preferred embodiments of the process according to the invention, the Li⁺ source is first dissolved in an aqueous solvent, the Fe²⁺, the Mn²⁺ and the M^{y+} sources as well as the PO₄³⁻ and SO₄²⁻ source are then added and mixed under inert gas atmosphere. The reaction then takes place under hydrothermal conditions and preferably under protective gas.

According to the invention, Li₂O, LiCl, LiNO₃, LiOH, Li₂SO₄ or Li₂CO₃, preferably LiOH, Li₂O, Li₂SO₄ or Li₂CO₃, is used as lithium source.

In further embodiments of the invention a second lithium source is used which is different from the first one. Preferably the second lithium source is Li₂SO₄ providing a cheap and simple source for sulphate consisting from the waste water when the process according to the invention is designed as a cyclic process as for example described in W02006/097324 or W02009/010263. If the first lithium source is already Li₂SO₄, then it is evident that the second one is not Li₂SO₄ but for example LiOH, Li₂O ect.

The Fe source is preferably an Fe²⁺ salt, in particular FeSO₄, FeCl₂, FeNO₃, Fe₃(PO₄)₂ or an Fe organyl salt or an iron carboxylate like iron oxalate, iron citrate, iron acetate etc.

The Mn source is preferably a water-soluble manganese (II) salt such as manganese sulphate, manganese acetate, manganese oxalate, manganese chloride, manganese nitrate, manganese hydroxide, manganese carbonate etc.

According to the invention, phosphoric acid, a metal phosphate, hydrogen phosphate or dihydrogen phosphate is preferably used as PO₄³⁻ source.

In particular, the corresponding sulphates, in particular of Mg, Zn and Ca, or the corresponding halides, nitrates, acetates, carboxylates, preferably the acetates and caboxylates may be used as source for the bivalent metal cation.

The invention is explained in more detail below with reference to examples and drawings which are not, however, to be considered as limiting the scope of the invention.

It is shown in:
- Figure 1: discharge curves at 1C and at room temperature for Li_{0.80}Mn_{0.56}Fe_{0.33}Zn_{0.10}PO₄ (Comparative Example 1) ;
- Figure 2: discharge curves at 1C and at room temperature for Li_{0.99}Mn_{0.56}Fe_{0.33}Zn_{0.10}PO₄₍SO₄)_{0.006} (Example 1) ;
- Figure 3: discharge curves at 1C and at room temperature for Li_{0.99}Mn_{0.56}Fe_{0.33}Zn_{0.010}PO₄(SO₄)_{0.01} (Example 2) ;
- Figure 4: discharge curves for at 1C at room temperature for Li_{0.80}Mn_{0.59}Fe_{0.34}Zn_{0.07}PO₄;
- Figure 5: discharge curves for at 1C at room temperature for Li_{0.91}Mn_{0.59}Fe_{0.34}Zn_{0.07}PO₄(SO₄)_{0.01};
- Figure 6: SEM image of Li_{0.80}Mn_{0.59}Fe_{0.34}Zn_{0.07}PO₄;
- Figure 7: SEM image of Li_{0.91}Mn_{0.59}Fe_{0.34}Zn_{0.07}PO₄(SO₄)_{0.01}
- Figure 8: discharge curves at 1C at room temperature for Li_{0.80}Mn_{0.80}Fe_{0.15}Zn_{0.05}PO₄
- Figure 9: discharge curves at 1C at room temperature for Li_{0.93}Mn_{0.80}Fe_{0.15}Zn_{0.05}PO₄(SO₄)₀.₀₁
- Figure 10: SEM image of Li_{0.80}Mn_{0.80}Fe_{0.15}Zn_{0.05}PO₄
- Figure 11: SEM image of LiMn_{0.80}Fe_{0.15}Zn_{0.05}PO₄(SO₄)_{0.01}
- Figure 12: discharge curves at 1C at room temperature for LiMn_{0.61}Fe_{0.34}Zn_{0.05}PO₄
- Figure 13: discharge curves at 1C at room temperature for Li_{0.96}Mn_{0.61}Fe_{0.34}Zn_{0.05}PO₄(SO₄)₀.₀₁
- Figure 14: SEM image of Li_{0.80}Mn_{0.61}Fe_{0.34}Zn_{0.05}PO₄
- Figure 15: SEM image of Li_{0.96}Mn_{0.61}Fe_{0.34}Zn_{0.05}PO₄(SO₄)_{0.01}
- Figure 16: discharge curves at 1C at room temperature for Li_{0.80}Mn_{0.63}Fe_{0.34}Zn_{0.03}PO₄
- Figure 17: discharge curves at 1C at room temperature for Li_{0.97}Mn_{0.63}Fe_{0.34}Zn_{0.03}PO₄(SO₄)_{0.01}

### Examples

### 1. Determination of the particle-size distribution:

The particle-size distributions for the mixtures or suspensions and of the produced material is determined using the light scattering method using commercially available devices. This method is known per se to a person skilled in the art, wherein reference is also made in particular to the disclosure in JP 2002-151082 and WO 02/083555. In this case, the particle-size distributions were determined by a laser diffraction measurement apparatus (Mastersizer S, Malvern Instruments GmbH, Herrenberg, DE) and the manufacturer's software (version 2.19) with a Malvern Small Volume Sample Dispersion Unit, DIF 2002 as measuring unit. The following measuring conditions were selected: compressed range; active beam length 2.4 mm; measuring range: 300 RF; 0.05 to 900 µm. The sample preparation and measurement took place according to the manufacturer's instructions.

The D₉₀ value gives the value at which 90% of the particles in the measured sample have a smaller or the same particle diameter. Accordingly, the D₅₀ value and the D₁₀ value give the value at which 50% and 10% respectively of the particles in the measured sample have a smaller or the same particle diameter.

According to an embodiment according to the invention, the values mentioned in the present description are valid for the D₁₀ values, D₅₀ values, the D₉₀ values as well as the difference between the D₉₀ and D₁₀ values relative to the volume proportion of the respective particles in the total volume. Accordingly, the D₁₀, D₅₀ and D₉₀ values mentioned herein give the values at which 10 volume-% and 50 volume-% and 90 volume-% respectively of the particles in the measured sample have a smaller or the same particle diameter. If these values are obtained, particularly advantageous materials are provided according to the invention and negative influences of relatively coarse particles (with relatively larger volume proportion) on the processability and the electrochemical product properties are avoided. Preferably, the values mentioned in the present description are valid for the D₁₀ values, the D₅₀ values, the D₉₀ values as well as the difference between the D₉₀ and the D₁₀ values relative to both percentage and volume percent of the particles.

For compositions (e.g. electrode materials) which, in addition to the lithium-manganese iron phosphates according to the invention are further doped with metal cations, contain further components, in particular for carbon-containing compositions, the above light scattering method can lead to misleading interpretations as the primary particles can form agglomerates within the suspension. However, the primary particle-size distribution of the material according to the invention can be directly determined as follows for such compositions using SEM photographs:
A small quantity of the powder sample is suspended in acetone and dispersed with ultrasound for 10 minutes. Immediately thereafter, a few drops of the suspension are dropped onto a sample plate of a scanning electron microscope (SEM). The solids concentration of the suspension and the number of drops are measured so that a large single-ply layer of powder particles forms on the support in order to prevent the powder particles from obscuring one another. The drops must be added rapidly before the particles can separate by size as a result of sedimentation. After drying in air, the sample is placed in the measuring chamber of the SEM. In the present example, this is a LEO 1530 apparatus which is operated with a field emission electrode at 1.5 kV excitation voltage and a 4 mm space between samples. At least 20 random sectional magnifications of the sample with a magnification factor of 20,000 are photographed. These are each printed on a DIN A4 sheet together with the inserted magnification scale. On each of the at least 20 sheets, if possible at least 10 free visible particles of the material according to the invention, from which the powder particles are formed together with the carbon-containing material, are randomly selected, wherein the boundaries of the particles of the material according to the invention are defined by the absence of fixed, direct connecting bridges. On the other hand, bridges formed by carbon material are included in the particle boundary. Of each of these selected particles, those with the longest and shortest axis in the projection are measured in each case with a ruler and converted to the actual particle dimensions using the scale ratio. For each measured particle, the arithmetic mean from the longest and the shortest axis is defined as particle diameter. The measured particles are then divided analogously to the light-scattering method into size classes. The differential particle-size distribution relative to the number of particles is obtained by plotting the number of the associated particles in each case against the size class. The cumulative particle-size distribution from which D₁₀, D₅₀ and D₉₀ can be read directly on the size axis is obtained by continually totalling the particle numbers from the small to the large particle classes.

The described process was also applied to battery electrodes containing the material according to the invention. In this case, however, instead of a powder sample a fresh cut or fracture surface of the electrode is secured to the sample holder and examined under a SEM.

When producing the materials, it is to be borne in mind that the materials are precipitated from an aqueous Fe²⁺ precursor solution. The reaction and drying/sintering is therefore preferably to be carried out under protective gas or vacuum in order to avoid a partial oxidation of Fe²⁺ to Fe³⁺ with formation of by-products such as Fe₂O₃ or FePO₄.

### Comparative Example 1:

### Synthesis of Li_{0.80}Mn_{0.56}Fe_{0.33}Zn_{0.10}PO₄

### Production and precipitation/suspension of a precursor mixture

First, 105.5 g lithium hydroxide LiOH · H₂O was dissolved in 0.9 1 distilled water. This solution is called basic solution.

77.43 g FeSO₄ x 7 H₂O, 79.88 g MnSO₄ x H₂O and 24.27 g ZnSO₄ x 7 H₂O were dissolved in approx. 1.5 1 distilled water and 103.38 g 80-% phosphoric acid added slowly accompanied by stirring. 0.4 1 distilled wash water was added. This solution is termed acid solution.

The basic solution was introduced into the laboratory autoclave (capacity: 4 litres) at 600 rpm stirrer speed, the autoclave loaded with approx. 6 - 7 bar nitrogen via the dipping tube and relieved again via the vent valve. The procedure was repeated three times.

A disperser (IKA, ULTRATURRAX® UTL 25 Basic Inline with dispersion chamber DK 25.11) was connected to the autoclave between vent valve and bottom outlet valve in order to carry out the dispersion or grinding treatment. The pumping direction of the disperser was bottom outlet valve - disperser - vent valve. The disperser was started on the middle power level (13,500 rpm) according to the manufacturer's instructions.

The prepared acid solution was then pumped with a membrane pump via the dipping tube into the autoclave (stroke 100%, 180 strokes/minute; corresponds to the maximum capacity of the pump) and reflushed with approx. 500 to 600 ml distilled water. The pumping-in lasted for approx. 20 minutes, wherein the temperature of the resultant suspension increased to approx. 40°C. After pumping-in of the acid solution, a deposit precipitated out.

The disperser, which was started before the addition of the acid solution, was used for a total of approx. 1 hour for intensive mixing or grinding of the resultant, viscous suspension (after pumping-in of the acid solution at 50°C).

The use of a disperser brings an intensive mixing and the agglomeration of the precipitated viscous pre-mixture. During the precipitation and crystallization of the suspension, a homogeneous mixture of many small, approximately equally-sized crystal nuclei formed in the disperser as a result of the pre-grinding or intensive mixing. These crystal nuclei crystallized during the subsequent hydrothermal treatment (see below) to very uniformly grown crystals of the end-product with a very narrow particle-size distribution. The power and energy input via the dispersion treatment was respectively more than 7 kW/m³ and more than 7 kWh/m³ of the treated precursor mixture/suspension.

### Hydrothermal treatment

Each freshly produced suspension was subjected to hydrothermal treatment in the laboratory autoclave. Before heating the suspension, the autoclave was flushed with nitrogen in order to expel any air present from the autoclave before the hydrothermal process. The product according to the invention formed starting from hydrothermal temperatures of approximately 100 to 120°C. The hydrothermal treatment was preferably carried out for 2 hours at 130°C.

After switching off and disconnecting the disperser the mixture was heated over 1.5 hours to 130°C, for 2 hours. Cooling to 30°C then took place over 3 hours.

LiMn_{0.56}Fe_{0.33}Zn_{0.10}PO₄ was then dried in air or in the drying oven for example at mild temperatures (40°C) without visible oxidation. The atomic ratio Li/∑_{Fe + Mn + M} was 0.85 indicating a lithium deficiency.

The thus-obtained material was pumped under nitrogen atmosphere through the bottom outlet valve of the autoclave into a pressure filter (Seitz filter). The membrane pump setting was such that a pressure of 5 bar was not exceeded. The filter cake was subsequently washed with distilled water until the conductivity of the wash water had fallen below 42 µS/cm.

### Comparative Example 2:

### Synthesis of LiMn_{0.56}Fe_{0.33}Mg_{0.10}PO₄

The synthesis was carried out as in Example 1, except that 20.80 g MgSO₄*7 H₂O was used as starting material in the corresponding molar weight quantities instead of ZnSO₄. The atomic ratio Li/∑_{Fe + Mn + M} was 0.87 indicating a lithium deficiency.

### Comparative Example 3:

### Synthesis of LiMn_{0.80}Fe_{0.10}Zn_{0.10}PO₄

The synthesis was carried out as in Example 1, except that 114.12 g MnSO₄*1 H₂O, 23.46 g FeSO₄*7 H₂O, 24.27 g ZnSO₄*7 H₂O, 103.38 g H₃PO₄, (80%) were used as starting materials in the corresponding molar weight quantities. The atomic ratio Li/∑_{Fe + Mn + M} was 0.78 indicating a lithium deficiency.

### Comparative Example 4:

### Synthesis of LiMn_{0.85}Fe_{0.10}Zn_{0.05}PO₄

The synthesis was carried out as in Example 1, except that 121.26 g MnSO₄*1 H₂O, 23.46 g FeSO₄*7 H₂O, 12.14 g ZnSO₄*7 H₂O, 103.38 g H₃PO₄ (80%) were used as starting materials in the corresponding molar weight quantities. The atomic ratio Li/∑_{Fe+ Mn + M} was 0.82 indicating a lithium deficiency.

### Example 1:

### Synthesis of Li_{0.99}Mn_{0.56}Fe_{0.33}Zn_{0.10}PO₄(SO₄)_{0.006}

The synthesis was carried out according to comparative example 1 with the difference that additionally 100 ml of a 0.1 m solution of Li₂SO₄ was added to the starting materials to obtain the desired stoichiometry. The atomic ratio Li/**∑**_{Fe + Mn + M} was 0.99 indicating no lithium deficiency.

### Example 2:

### Synthesis of Li_{0.99}Mn_{0.56}Fe_{0.33}Zn_{0.10}PO₄(SO₄)_{0.01}

The synthesis was carried out according to comparative example 1 with the difference that additionally 100 ml of a 0.1 m solution of Li₂SO₄ was added to the starting materials to obtain the desired stoichiometry. The atomic ratio Li/**∑**_{Fe + Mn + M} was 0.99 indicating no lithium deficiency.

### Example 3:

The following materials (with the atomic ratio Li/**∑**_{Fe + Mn + M} determined by ICP-OES measurements (Varian Vista Pro 720 ES) were synthesized according to example 1 but varying the amounts of the lithium sulphate solution.

LiₓMn_{0.56}Fe_{0.33}Zn_{0.10}PO₄(SO₄)_{0.01} (atomic ratio Li/**∑**_{Fe + Mn + M}: 0.937), LiₓMn_{0.59}Fe_{0.34}Zn_{0.07}PO₄(SO₄)_{0.01} ((atomic ratio Li/∑_{Fe + Mn + M}: 0.911);
LiₓMn_{0.80}Fe_{0.15}Zn_{0.05}PO₄(SO₄)_{0.01}(atomic ratio Li/**∑**_{Fe + Mn + M}: 0.930) ; LiₓMn_{0.61}Fe_{0.34}Zn_{0.05}PO₄(SO₄)₀.₀₁ (atomic ratio Li/∑_{Fe + Mn + M}: 0.964) LiₓMn_{0.63}Fe_{0.34}Zn_{0.03}PO₄(SO₄)_{0.01} (atomic ratio Li/∑_{Fe + Mn + M} : 0.972) ; LiₓMn_{0.59}Fe_{0.34}Zn_{0.07}PO₄(SO₄)_{0.006} (atomic ratio Li/Σ_{Fe + Mn + M}: 0.945) ; LiₓMn_{0.80}Fe_{0.15}Zn_{0.05}PO₄(SO₄)_{0.006} (atomic ratio Li/Σ_{Fe + Mn + M}: 0.973) ; LiₓMn_{0.61}Fe_{0.34}Zn_{0.05}PO₄ (SO₄)_{0.006} (atomic ratio Li/∑_{Fe + Mn + M}: 0.981) LiₓMn_{0.63}Fe_{0.34}Zn_{0.03}PO₄ (SO₄)_{0.006} (atomic ratio Li/∑_{Fe + Mn + M}: 0.922)

### Example 4:

### Carbon coating of the obtained materials (variant 1)

The filter cakes obtained in Examples 1 to 4 were impregnated with a solution of 24 g lactose in water and then calcined at 750°C for 3 hours under nitrogen.

Depending on the quantity of lactose, the proportion of carbon in the product according to the invention was between 0.2 and 4 wt.-%.

Typically 1 kg dry product from Examples 1 and 2 was mixed intimately with 112 g lactose monohydrate and 330 g deionized water and dried overnight in a vacuum drying oven at 105°C and < 100 mbar to a residual moisture of 3%. The brittle drying product was broken by hand and coarse-ground in a disk mill (Fritsch Pulverisette 13) with a 1 mm space between disks and transferred in high-grade steel cups into a protective gas chamber furnace (Linn KS 80-S). The latter was heated to 750°C within 3 hours at a nitrogen stream of 200 1/h, kept at this temperature for 3 hours and cooled over 3 hours to room temperature. The carbon-containing product was disagglomerated in a jet mill (Hosokawa).

The SEM analysis of the particle-size distribution produced the following values: D₅₀ < 0.5 µm, difference between D₉₀ and D₁₀ value: < 1 µm.

### Example 5:

### Carbon coating of the obtained materials (variant 2)

The synthesis of the materials according to the invention was carried out as in Examples 1 to 4, except that gelatine was also then added (9 g gelatine per 100 g starting product) during the precipitation step a). The end-product contained approx. 2.3 wt.-% carbon.

### Example 6: Manufacture of electrodes

Thin-film electrodes as disclosed for example in Anderson et al., Electrochem. and Solid State Letters 3 (2) 2000, pages 66-68 were produced. The electrode compositions usually consisted of 90 parts by weight active material, 5 parts by weight Super P carbon and 5-% polyvinylidene fluoride as binder or 80 parts by weight active material, 15 wt.-% Super P carbon and 5 parts by weight polyvinylidene fluoride, or 95 parts by weight active material and 5 parts by weight polyvinylidene fluoride.

The active material was mixed, together with the binder (or, for the electrodes of the state of the art, with the added conductive agent), in N-methylpyrrolidone, applied to a pretreated (primer) aluminium foil by means of a doctor blade and the N-methylpyrrolidone was evaporated at 105°C under vacuum. The electrodes were then cut out (13 mm diameter) and roll-coated with a roller at room temperature. The starting nip width was e.g. 0.1 mm and the desired electrode thickness progressively adjusted in steps of 5-10 µm. 4 rolled coats were applied at each step and the foil was rotated by 180°. After this treatment, the thickness of the coating was between 20-25µm. The primer on the aluminium foil consisted of a thin carbon coating which improves the adhesion of the active material particularly when the active material content of the electrode is more than 85 wt.-%.

The electrodes were then dried overnight at 120°C under vacuum. Half cells were assembled in an argon-filled glovebox and were subsequently electrochemically measured..

The electrochemical measurements were carried out against lithium metal and using LP30 (Merck, Darmstadt) as electrolyte (EC (ethylene carbonate):DMC (dimethylcarbonate) = 1:1, 1 M LiPF₆).

The charge procedure was carried out in CCCV mode, i.e. cycles with a constant current at the C/10 rate followed by a constant voltage portion at the voltage limits (4.3 volt versus Li/Li⁺) until the current fell approximately to the C/100 rate, in order to complete the charge.

Corresponding measurements of the specific capacity and the current carrying capacity were carried out on both Liₓ(Mn_{0.66}Fe_{0.33})PO₄ of the state of the art and materials according to the invention substituted with magnesium and zinc.

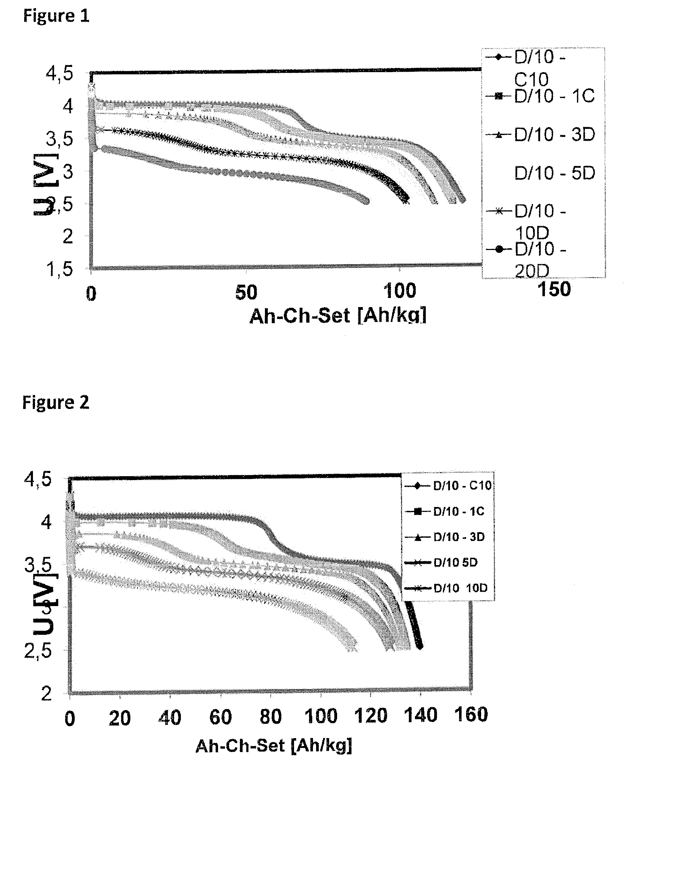

Figure 1 shows the discharge curves at 1C and at room temperature for an electrode containing Li_{0.80}Mn_{0.56}Fe_{0.33}Zn_{0.10}PO₄ (Comparative Example 1) as active material. The ratio Li/∑_{Fe + Mn + M} was 0.8 which is an indicator for Li deficiency. The specific energy was measured to 446 mWh/g, the press density 1.51 g/cm³ and the volumetric energy 673 mWh/cm³. After several cycles, aloss of specific capacity was recorded in the range of 15 to 40 mAh/g.

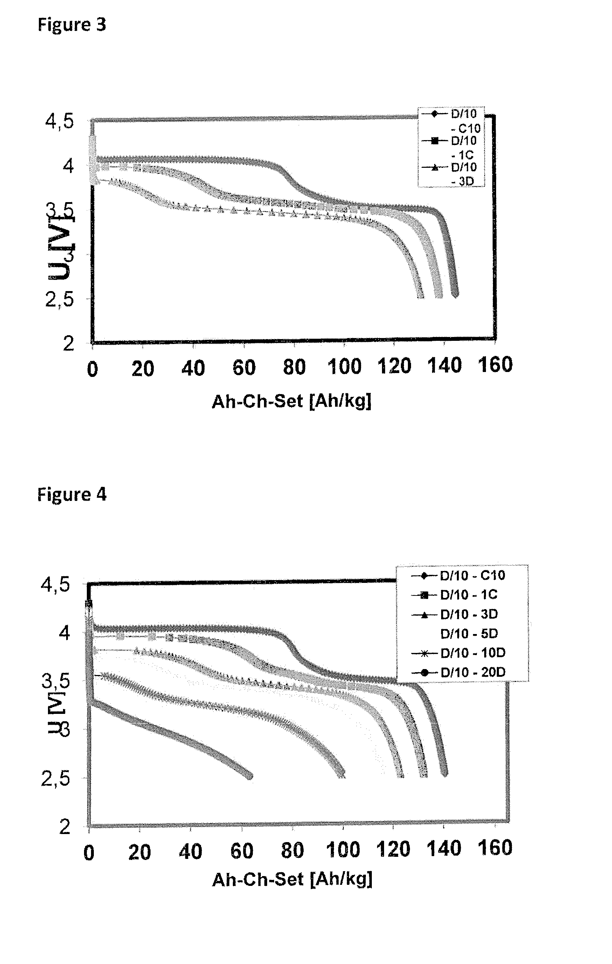

Figure 2 shows the discharge curves at 1C and at room temperature for an electrode containing Li_{0.99}Mn_{0.56}Fe_{0.33}Zn_{0.10}PO₄(SO₄)_{0.006} (Example 1) as active material and Figure 3 the discharge curves at 1C and at room temperature for an electrode containing Li_{0.99}Mn_{0.56}Fe_{0.33}Zn_{0.10}PO₄(SO₄)_{0.01} (Example 2) as active material. Compared to the material shown in Figure 1 representing state of the art the energy loss upon cycling is remarkably diminished. Both samples show basically no Li deficiency (Example 1 and Example 2 both have a Li/**∑**_{Fe + Mn + M} ratio of 0.99. The specific energy for the electrode with Li_{0.99}Mn_{0.56}Fe_{0.33}Zn_{0.10}PO₄(SO₄)_{0.006} as active material was measured as 522 mWh/g for the electrode with Li_{0.99}Mn_{0.56}Fe_{0.33}Zn_{0.10}PO₄(SO₄)_{0.01} as active material to 527 mWH/g, i.e. remarkably higher than with the electrode of the prior art shown in figure 1. The same improvement was observed for the press density (1.86 g/cm³ and 2.15 g/cm³ respectively) and the volumetric energy (970 mWh/cm³ and 1133 mWh/cm³ respectively).

Figure 4 shows the discharge curves at 1C at room temperature for an electrode with Li_{0.80}Mn_{0.59}Fe_{0.34}Zn_{0.07}PO₄ as active material and in comparison

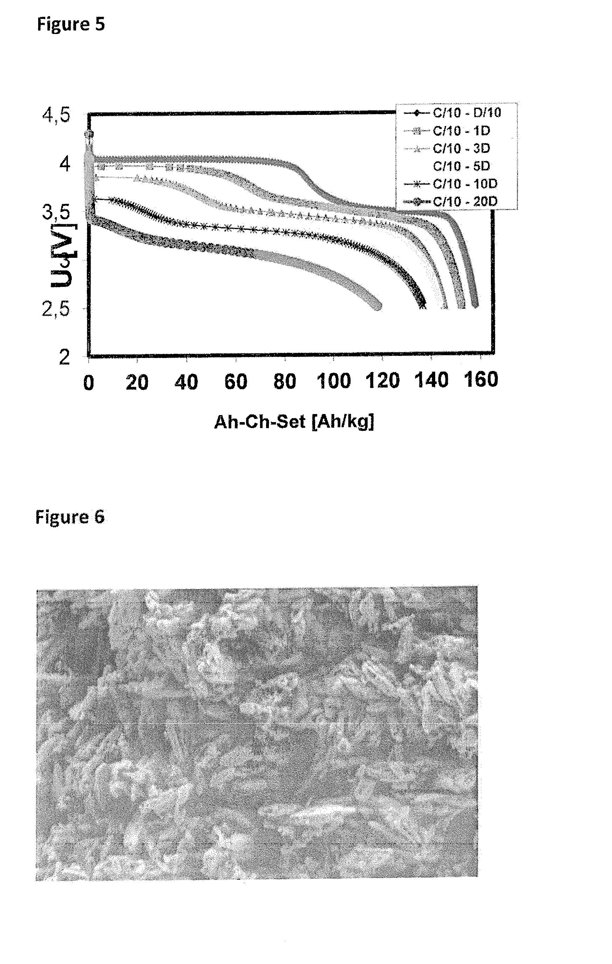

Figure 5 the discharge curves at 1C at room temperature for an electrode containing Li_{0.91}Mn_{0.59}Fe_{0.34}Zn_{0.07}PO₄(SO₄)_{0.01} as active material. After several cycles it was observed that the energy loss upon cycling is remarkably diminished for the material Li_{0.91}Mn_{0.59}Fe_{0.34}Zn_{0.07}PO₄(SO₄)_{0.01} according to the invention compared to the prior art material LiMn_{0.59}Fe_{0.34}Zn_{0.07}PO₄. The values for specific energy were determined as 525 mWH/g to 595 mWH/g showing the better performance of the material according to the invention. The same observation was made for the parameters press density (1.63 g/cm³ to 1.64 g/cm³) and volumetric energy (855 mWh/cm³ to 975 mWh/cm³).

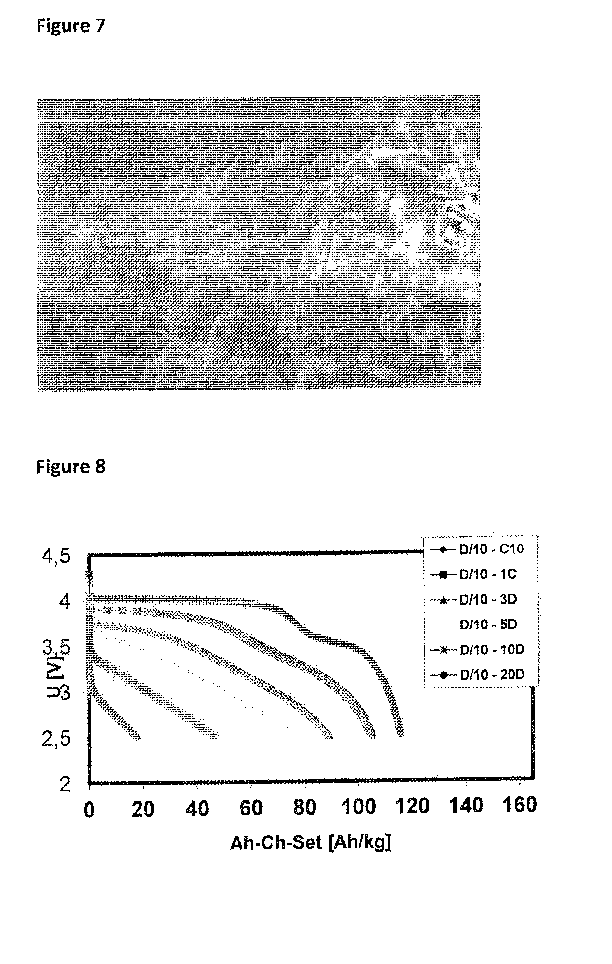

Comparing the physical appearance (SEM images) of the particles of Li_{0.80}Mn_{0.59}Fe_{0.34}Zn_{0.07}PO₄ in figure 6 with Li_{0.91}Mn_{0.59}Fe_{0.34}Zn_{0.07}PO₄(SO₄)_{0.01} in figure 7 it was observed that the particles of Li_{0.91}Mn_{0.59}Fe_{0.34}Zn_{0.07}PO₄(SO₄)_{0.01} are slightly more finely grained and have a more regular shape than those of LiMn_{0.59}Fe_{0.34}Zn_{0.07}PO₄.

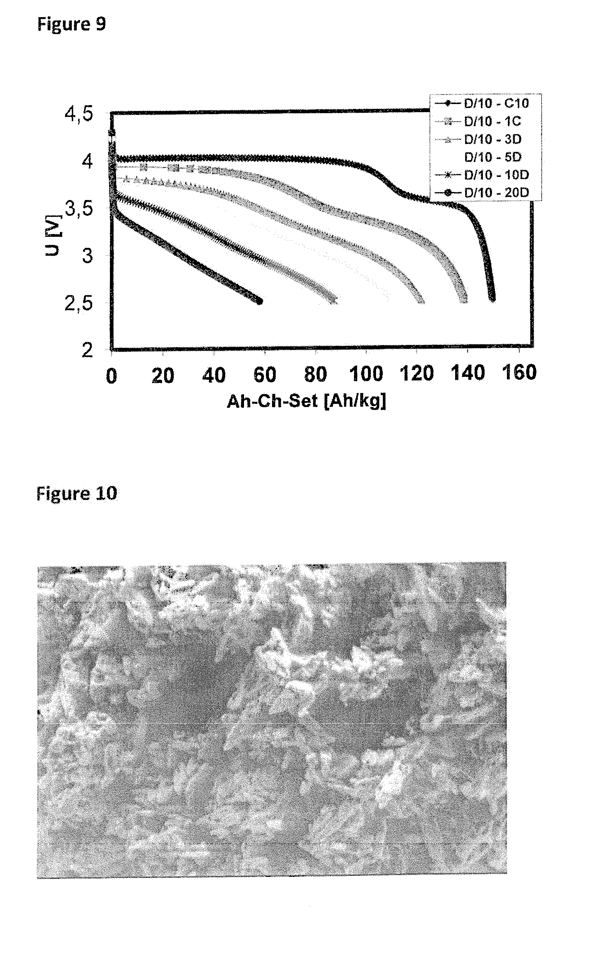

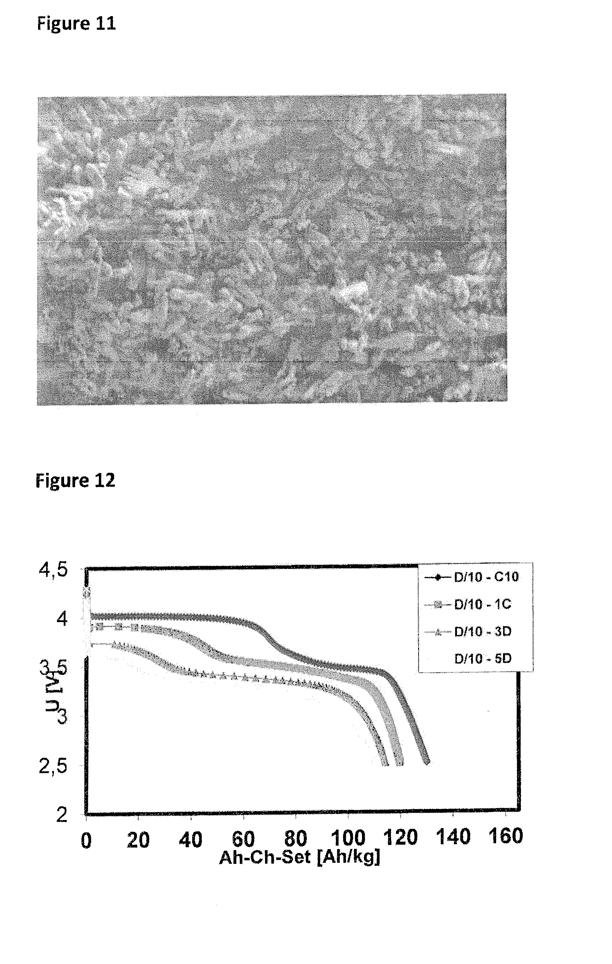

Figure 8 shows the discharge curves at 1C at room temperature for an electrode containing Li_{0.80}Mn_{0.80}Fe_{0.15}Zn_{0.05}PO₄ as active material and in comparison in figure 9 the discharge curves at 1C at room temperature for an electrode containing Li_{0.93}Mn_{0.80}Fe_{0.15}Zn_{0.05}PO₄(SO₄)_{0.01} as active material. The same trend as observed beforehand was also observed for this material:
The values for specific energy were determined as 437 mWH/g to 575 mWH/g showing the better performance of the material according to the invention. The same observation was made for the parameters press density (1.70 g/cm³ to 1.72 g/cm³) and volumetric energy (751 mWh/cm³ to 978 mWh/cm³). The SEM images for both products are shown in figure 10 (Li_{0.80}Mn_{0.80}Fe_{0.15}Zn_{0.05}PO₄) and figure 11 (LiMn_{0.80}Fe_{0.15}Zn_{0.05}PO₄(SO₄)_{0.01}) with the same conclusion as beforehand.

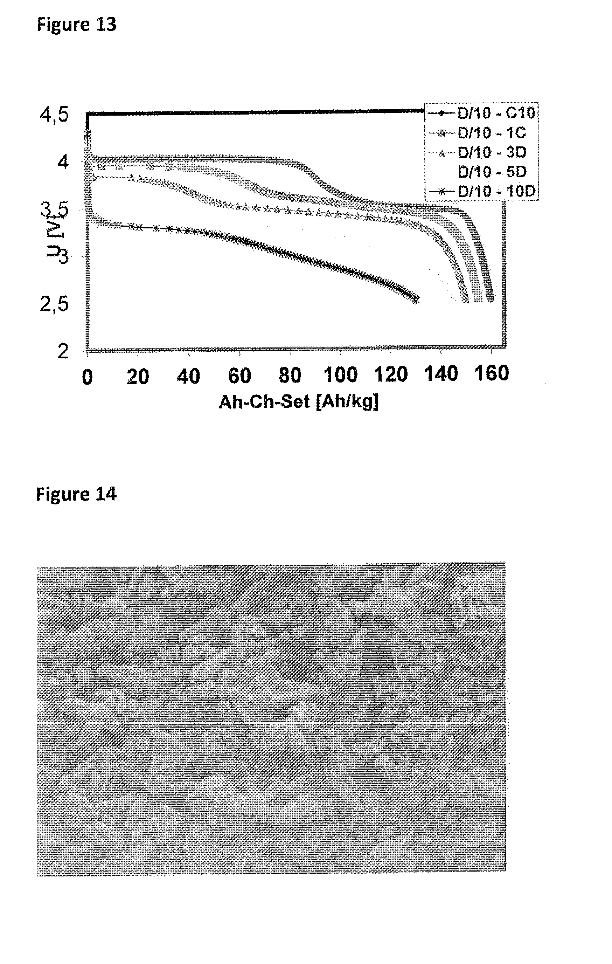

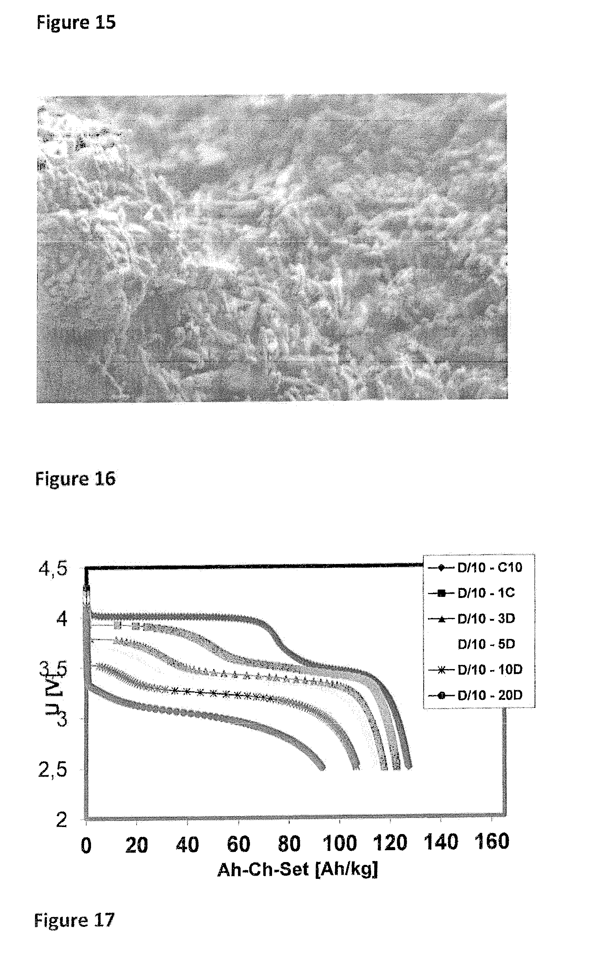

Figure 12 shows the discharge curves at 1C at room temperature for an electrode containing LiMn_{0.61}Fe_{0.34}Zn_{0.05}PO₄ as active material and in comparison in figure 13 the discharge curves at 1C at room temperature for an electrode containing Li_{0.96}Mn_{0.61}Fe_{0.34}Zn_{0.05}PO₄(SO₄)_{0.01} as active material. The same trend as observed beforehand was also observed for this material:
The values for the specific energy were determined as 446 mWH/g to 595 mWH/g showing the better performance of the material according to the invention. The same observation was made for the volumetric energy (856 mWh/cm³ to 1011 mWh/cm³) whereas the press density (1.92 g/cm³ to 1.70 g/cm³) showed an inverse effect compared to the other materials discussed beforehand. The SEM images for both products are shown in figure 14 (Li_{0.80}Mn_{0.61}Fe_{0.34}Zn_{0.05}PO₄) and figure 15 (Li_{0.96}Mn_{0.61}Fe_{0.34}Zn_{0.05}PO₄(SO₄)_{0.01}) with the same conclusion as above.

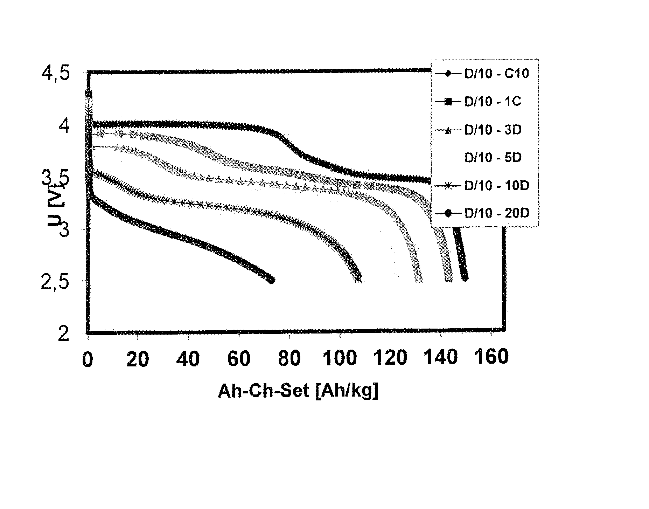

Figure 16 shows the discharge curves at 1C at room temperature for an electrode containing Li_{0.80}Mn_{0.63}Fe_{0.34}Zn_{0.03}PO₄ as active material and in comparison in figure 17 the discharge curves at 1C at room temperature for an electrode containing Li_{0.97}Mn_{0.63}Fe_{0.34}Zn_{0.03}PO₄(SO₄)_{0.01} as active material. The same trend as observed beforehand was also observed for this material:
The values for the specific energy were determined as 436 mWH/g to 575 mWH/g showing the better performance of the material according to the invention. The same observation was made for the volumetric energy (785 mWh/cm³ to 1040 mWh/cm³) and the press density (1.80 g/cm³ to 1.81 g/cm³).

## Claims

1. Mixed Lithium-manganese-metal phosphate of formula
LiₓFe_{y}Mn_{1-y}M_{1-(y+z)}(PO₄)ᵤ(SO₄)ᵥ
wherein
M is a metal selected from the group Co, Ni, Al, Mg, Sn, Pb, Nb B, Cu, Cr, Mo, Ru, V, Ga, Ca, Sr, Ba, Ti, Zr, Cd and mixtures thereof
and wherein:
0.9 ≤ x ≤ 1.5, 0 ≤ y < 1, and 0.001 ≤ (y + z) ≤ 1 and 0.75 < u < 1,0 and 0 < v ≤ 0,25.

2. Mixed Lithium-manganese-metal phosphate according to claim 1, wherein M is selected from Co, Mg, Nb, Ni, Al, Zn and mixtures thereof.

3. Mixed Lithium-manganese metal phosphate according to claim 2, wherein M is Zn or Mg or mixtures thereof.

4. Mixed Lithium-manganese metal phosphate according to one of claims 1 to 3, wherein the atomic ratio Li/**∑**_{Fe + Mn + M} is in the range between 0.9 to 1.5.

5. Mixed Lithium-manganese metal phosphate according to one of the previous claims, further comprising carbon.

6. Lithium-manganese metal phosphate according to claim 5, wherein carbon is evenly distributed throughout the mixed Lithium-manganese metal phosphate and/or the individual particles of the mixed lithium-manganese metal phosphate are partially or entirely coated with carbon.

7. Lithium-manganese metal phosphate according to one of claims 5 to 7, wherein the amount of carbon relative to the substituted lithium-manganese metal phosphate is ≤ 4 wt.-%.

8. Cathode for a secondary lithium-ion battery containing a lithium-manganese metal phosphate according to one of claims 1 to 7.

9. Cathode according to claim 8, which is free of added conductive agents.

10. Process for producing a mixed lithium-manganese iron phosphate according to one of the previous claims 1 to 7, comprising the following steps:
a. providing an aqueous mixture with a pH < 7,5 containing at least one Li starting compound, one Mn starting compound, one Fe starting compound, optionally one M starting compound, one PO₄³⁻ and one SO₄²⁻ starting compound until a precipitate or suspension forms,
b. carrying out a dispersion or grinding treatment of the mixture and/or the suspension.
c. Obtaining the mixed lithium-manganese iron phosphate, from the suspension by reaction of the suspension under hydrothermal conditions.

11. Process according to claim 10, wherein in step a) or step c) a further, carbon-containing, component is added.

12. Process according to claim 10, wherein the mixed lithium-manganese metal phosphate obtained in step c) is mixed with a carbon-containing component.

13. Process according to anyone of claims 10 to 12, wherein two different Li sources are used.

14. Process according to claim 13, wherein one Li source is Li₂SO₄.

15. Lithium-manganese metal phosphate obtainable by a process according to one of claims 10 to 14.
